# EUROPÄISCHE PATENTSCHRIFT

(11) **EP 2 228 577 B1**
(45) Veröffentlichungstag und Bekanntmachung des Hinweises auf die Patenterteilung: **04.07.2012**
(21) Anmeldenummer: 10155965.6
(22) Anmeldetag: 09.03.2010
(51) Int. Cl.: F16L 5/02, F16L 5/08, F16L 5/06

(54) **Dichtungsvorrichtung zum Abdichten eines Durchbruchs**
Sealing device for sealing an aperture
Dispositif d'étanchéité destiné à étanchéifier une percée

(30) Priorität: 10.03.2009 DE 202009003184 U
(43) Veröffentlichungstag der Anmeldung: 15.09.2010
(73) Patentinhaber: DOYMA GmbH & Co, 28876 Oyten (DE)
(72) Erfinder: Chikatimalla, Rajesh, 28876, Oyten (DE)
(74) Vertreter: Eisenführ, Speiser & Partner

(56) Entgegenhaltungen:
- EP-A1- 2 131 085
- US-A- 5 222 334
- US-A1- 2004 080 119
- US-B1- 6 353 184

## Beschreibung

Die vorliegende Erfindung betrifft eine Dichtungsvorrichtung zum Abdichten eines Durchbruchs, mit mindestens einem elastisch verformbaren Dichtkörper.

Derartige Dichtungsvorrichtungen werden dort eingesetzt, wo Leitungen wie Strom-, Gas- und/oder Wasserleitungen durch einen Durchbruch in einer Wand, Decke oder Bodenplatte abgedichtet hindurch geführt werden. Die Wand kann beispielsweise eine Gebäude- oder eine Schiffswand sein. Innerhalb eines Gebäudes findet man Durchbrüche immer dort, wo Leitungen über Geschoss- oder Raumgrenzen hinweg verlaufen. Insbesondere bei Hauseinführungen, bei denen Leitungen von außen in das Gebäude eingeführt werden, ist es notwendig, die Durchbruch abzudichten, um das Eindringen von Feuchtigkeit in das Gebäude zu verhindern. Auch innerhalb von Gebäuden oder Schiffen ist die Abdichtung der Durchbrüche dann wichtig, wenn Leitungen durch Feuchträume wie Bäder und Duschen verlaufen. Durchbrüche sind üblicherweise in Form von Kernlochbohrungen ausgeführt.

Bei der Montage wird eine Dichtungsvorrichtung mit dem Dichtkörper über die Leitungen gestülpt, in den Durchbruch eingeführt und der Dichtkörper mit einer Spanneinrichtung so verspannt, dass er den Raum zwischen der Innenfläche des Durchbruchs und der Mantelfläche der Leitung ausfüllt und dichtend abschließt. Die Dichtkörper haben eine im Wesentlichen hohlzylindrische Form mit einem Innendurchmesser, der in etwa dem Durchmesser der Leitung entspricht und einen Außendurchmesser, der in etwa dem Durchmesser der Kernlochbohrung entspricht. Der Raum zwischen der Innenfläche des Durchbruchs und der Mantelfläche der Leitung ist dabei je nach Größe des Durchbruchs und der verwendeten Leitung unterschiedlich groß.

Eine Dichtungsvorrichtung zum Abdichten einer Leitung in einem Durchbruch ist beispielsweise in der US 5222334 offenbart.

Auch wenn der Dichtkörper elastisch verformbar ist, sind die überwindbaren Größenunterschiede begrenzt, so dass der Dichtkörper für nahezu jeden gängigen Leitungsdurchmesser und für jeden Durchmesser von Kernlochbohrungen angepasst werden muss. Hierzu ist es bekannt, für jede gängige Kombination aus Leitungsdurchmesser und Durchmesser der Kernlochbohrungen einen gesonderten Dichtkörper zu verwenden. Dies ist jedoch umständlich, da immer der passende Dichtkörper vorhanden sein muss, was die Lagerhaltung kompliziert und unflexibel macht. Sollten die Durchmesser der Kernlochbohrungen oder der Leitungen während der Bauphase eines Gebäudes kurzfristig geändert werden, so kann es leicht vorkommen, dass erst die passenden Dichtkörper bestellt und geliefert werden müssen, was den Bau verzögern kann. Eine Möglichkeit, die Dichtkörper flexibel und kurzfristig auf die vorhandenen Leitungs- und Kernlochdurchmesser anzupassen, besteht darin, die Dichtkörper so zu gestalten, dass sie mit Schneidwerkzeugen bearbeitet und so ihre Innen- und Außendurchmesser verändert werden können. Das Hantieren mit Schneidwerkzeugen ist jedoch ungenau, gefährlich und zeitintensiv. Ferner müssen die Dichtkörper mit einem bestimmten Drehmoment verspannt werden. Müssen beispielsweise Leitungen mit dünnen Kunststoffwänden abgedichtet werden, kann ein Überschreiten des zulässigen Drehmoments zu Beschädigungen an den Leitungen führen.

Aufgabe der vorliegenden Erfindung ist es daher, die Nachteile des Standes der Technik zu reduzieren und eine Dichtungsvorrichtung anzugeben, die es ermöglicht, den Innen- und/oder Außendurchmesser des Dichtkörpers einfach, schnell und ungefährlich auf die vorhandenen Leitungs- und Kernlochdurchmesser anzupassen. Die Montage der Dichtungsvorrichtung soll ferner dadurch vereinfacht werden, dass keine Drehmomentvorgabe notwendig ist. Ferner soll der Zuordnungsbereich der Dichtungsvorrichtung, also die Größe des Raums zwischen der Innenfläche des Durchbruchs und der Mantelfläche der Leitung, möglichst groß sein und die Dichtungsvorrichtung einfach zu fertigen sein.

Gelöst wird die Aufgabe durch eine Dichtungsvorrichtung gemäß des Anspruchs 1.

Die Sollbruchstellen verlaufen in etwa so, dass sie den gängigen Leitungsdurchmessern entsprechen. Die erfindungsgemäße Dichtungsvorrichtung kann somit bei der Montage ohne Zuhilfenahme von Schneidwerkzeugen schnell und einfach auf die vorhandenen Leitungs- und Kernlochbohrungen angepasst werden. Da die Anzahl der Abschnitte prinzipiell beliebig gewählt werden kann, kann ein großer Zuordnungsbereich der Dichtungsvorrichtung realisiert werden. Erfindungsgemäß weisen die Abschnitte Griffbereiche zum Ergreifen und zum Trennen der Abschnitte an den Sollbruchstellen auf. Mittels der Griffbereiche kann gezielt manuell eine Kraft in denjenigen Abschnitt eingeleitet werden, der entlang der Sollbruchstelle vom benachbarten Abschnitt abgetrennt werden soll. Die Griffbereiche erleichtern den Abtrennvorgang und tragen zu einer schnelleren Montage der Dichtungsvorrichtung bei. Es ist hiermit nicht notwendig, jeden Abschnitt einzeln abzutrennen, bis dass der gewünschte Durchmesser erreicht ist, sondern es kann gleich derjenige Griffbereich gewählt werden, der die Sollbruchstelle mit dem benötigten Durchmesser öffnet. Mit einem Arbeitsgang kann so der Dichtkörper auf den benötigten Durchmesser angepasst werden.

Vorzugsweise sind die Griffbereiche benachbart zu den Sollbruchstellen im Dichtkörper angeordnet. Die Sollbruchstelle wird so gezielt aufgebrochen, so dass sich eine klar definierte Trennfläche zwischen den jeweiligen Abschnitten bildet.

Eine bevorzugte Ausgestaltung der Erfindung zeichnet sich durch eine mit der Sollbruchstelle zusammenwirkende Ausnehmung oder Öffnung zum Öffnen der Sollbruchstelle aus. Die Öffnung ist vorzugsweise in der Ausnehmung angeordnet und bildet bereits einen Bereich, in dem die Abschnitte voneinander getrennt sind. Von der Öffnung bzw. Ausnehmung ausgehend lassen sich die Abschnitte entlang der Sollbruchstelle leichter voneinander trennen, beispielsweise dadurch, dass ein Haken in die Öffnung eingeführt werden kann.

Vorteilhafterweise verläuft die Ausnehmung rotationssymmetrisch um eine Längsachse der Dichtungsvorrichtung. Dadurch, dass die Sollbruchstelle in sich geschlossen ist, werden die jeweiligen Abschnitte entlang einer klar definierten Trennfläche voneinander getrennt. Die entstehenden Trennflächen wirken sich nicht störend auf die Dichtwirkung des Dichtkörpers aus, so dass die Funktionalität der Dichtungsvorrichtung nicht beeinträchtigt wird.

Die Erfindung betrifft weiterhin einen ersten elastisch verformbaren Dichtkörper, welcher eine oder mehrere sich im Wesentlichen in axialer Richtung erstreckenden Ausnehmungen aufweist.

Ferner wird die Erfindung durch einen zweiten Körper, vorzugsweise einen elastisch verformbaren Dichtkörper, mit einem oder mehreren sich im Wesentlichen in axialer Richtung erstreckenden Vorsprüngen ausgebildet, wobei die Ausnehmungen des ersten Dichtkörpers und die Vorsprünge des zweiten Körpers miteinander korrespondieren, so dass der erste Dichtkörper und der zweite Körper ineinander steckbar sind.

Der erste Dichtkörper und der zweite Körper lassen sich so einfach herstellen, z.B. mittels Spritzguss, und einfach - axial - ineinander stecken.

Erfindungsgemäß, weisen der erste elastisch verform bare Dichtkörper einen oder mehrere erste Vorsprünge und der zweite Körper eine oder mehrere zweite Ausnehmungen auf, wobei der erste Vorsprung und die zweite Ausnehmung miteinander korrespondieren, so dass der erste und der zweite Dichtkörper ineinander axial steckbar sind.

Gemäß einer bevorzugten Ausführungsform wird vorgeschlagen, dass mehrere, bezogen auf eine Längsachse konzentrische Ausnehmungen und mehrere konzentrische Vorsprünge an dem ersten Dichtkörper ausgebildet sind und mehrere, bezogen auf eine Längsachse konzentrische Ausnehmungen und konzentrische Vorsprünge an dem zweiten Dichtkörper ausgebildet sind, die so radial versetzt zueinander angeordnet sind, dass die Vorsprünge des einen Dichtkörpers in die Ausnehmungen des anderen Dichtkörpers in axialer Richtung einschiebbar sind. Vorzugsweise sind die Ausnehmungen und Vorsprünge so ausgebildet, dass im vollständig eingeschobenen Zustand die Vorsprünge des einen Dichtkörpers die Ausnehmungen des anderen Dichtkörpers im Wesentlichen ausfüllen. So ergibt sich insgesamt ein sehr kompakter Dichtkörper.

Ein herstellungstechnischer Vorteil ergibt sich dadurch, dass die Seitenflächen der Ausnehmung oder Vorsprünge bezogen auf die Längsachse in einem Winkel von etwa 0,5 bis 2 Grad, vorzugsweise 1,4 Grad verlaufen, da sich der Körper so einfach von einem Werkzeug entfernen lässt.

Vorzugsweise wird mindestens eine erste Sollbruchstelle durch eine erste Ausnehmung, etwa eine Nut oder Kerbe definiert, an welcher der erste Vorsprung abtrennbar ist und/oder eine zweite durch eine zweite Ausnehmung, bspw. eine Nut oder Kerbe, definiert, an welcher der zweite Vorsprung abtrennbar ist. Die Sollbruchstellen verlaufen in etwa so, dass sie den gängigen Leitungs- und Kernlochbohrungen entsprechen. Die erfindungsgemäße Dichtungsvorrichtung kann somit ohne Zuhilfenahme von Schneidwerkzeugen schnell und einfach auf die vorhandenen Leitungs- und Kernlochbohrungen angepasst werden. Da die Anzahl der Ausnehmungen prinzipiell beliebig gewählt werden kann, kann ein großer Zuordnungsbereich der Dichtungsvorrichtung realisiert werden.

Die erfindungsgemäße Dichtungsvorrichtung wird vorteilhaft dadurch fortgebildet, dass die Sollbruchstelle durch eine Ausnehmung, Perforation, abschnittsweise abweichende Materialeigenschaften, eine Stufe oder einen Absatz im Dichtkörper oder Körper definiert wird. Ausnehmungen lassen sich beispielsweise im Spritzgussverfahren einfach fertigen. Die Ausnehmungen verlaufen wiederum in etwa so, dass sie den gängigen Durchmessern der Leitungen und der Kernlochbohrungen der Durchbrüche entsprechen. Die Ausnehmungen sind so dimensioniert, dass sie einerseits die Dichtwirkung des Dichtkörpers nicht beeinträchtigen, sie es andererseits ermöglichen, die jeweiligen Abschnitte ohne Zuhilfenahme von Werkzeugen zu trennen. Ferner ergibt sich eine vorteilhafte Ausführung durch eine Sollbruchstelle, die durch eine Nut oder Kerbe und/oder die zweite definiert werden. Die Sollbruchstelle kann beispielsweise dadurch definiert werden, dass der Dichtkörper an den entsprechenden Stellen eine geringere Stärke aufweist und/oder aus einem Material besteht, das einfacher zu trennen ist als das übrige Material. Alternativ kann eine Vielzahl von Öffnungen in den Ausnehmungen ähnlich einer Perforation vorgesehen sein, so dass die jeweiligen Abschnitte nur noch teilweise miteinander verbunden und daher einfach voneinander abtrennbar sind. Die Nuten bzw. Kerben tragen dazu bei, dass die Trennflächen genauer definiert sind, so dass diese sich nicht störend auf die Dichtwirkung der Dichtkörper auswirken. Ferner wird es dadurch leichter, die Sollbruchstellen aufzubrechen.

Vorzugsweise verlaufen die ersten und zweiten Vorsprünge und die ersten und zweiten Ausnehmungen rotationssymmetrisch um eine Längsachse der Dichtungsvorrichtung. Dadurch, dass die Sollbruchstelle in sich geschlossen ist, werden die jeweiligen Abschnitte entlang einer klar definierten Trennfläche voneinander getrennt. Die entstehenden Trennflächen wirken sich nicht störend auf die Dichtwirkung des Dichtkörpers aus, so dass die Funktionalität der Dichtungsvorrichtung nicht beeinträchtigt wird.

Die Erfindung ist weiterhin gekennzeichnet durch Entlüftungslöcher zum Abführen der sich in den Ausnehmungen befindenden Luft beim Ineinanderstecken des ersten und des zweiten Körpers. Die ersten und zweiten Ausnehmungen und die ersten und zweiten Vorsprünge sind vorzugsweise so gestaltet, dass sie sich beim Ineinanderstecken des ersten Dichtkörpers und des zweiten Körpers berühren. Je weiter die Dicht- bzw. Körper ineinander gesteckt werden, desto größer werden die Berührungsflächen der jeweils benachbarten ersten und zweiten Vorsprünge. Da ein radiales Ausweichen der Dicht- bzw. Körper und der Vorsprünge zwischen der Kernlochbohrung des Durchbruchs und der Leitung nur begrenzt möglich ist, kann der Fall eintreten, dass die sich in den Ausnehmungen befindende Luft nicht entweichen kann, wodurch die Dicht- bzw. Körper nicht mehr weiter ineinander gesteckt werden können. Um dies zu verhindern, sind vorzugsweise die erfindungsgemäßen Entlüftungslöcher vorgesehen.

Vorzugsweise enthält die Dichtungsvorrichtung eine Spanneinrichtung zum Verspannen des Dichtkörpers und des Körpers, mittels dessen der ersten und zweite Dichtkörper bei der Montage ineinander verspannt werden können.

Eine bevorzugte Weiterbildung der vorliegenden Erfindung zeichnet sich durch eine mit der ersten Sollbruchstelle und/oder eine mit der zweiten Sollbruchstelle zusammenwirkende Öffnung zum Öffnen der Sollbruchstellen aus. Die Öffnung ist vorzugsweise in der Ausnehmung angeordnet und bildet bereits einen Bereich, in dem die Abschnitte voneinander getrennt sind. Von der Öffnung ausgehend lassen sich die Abschnitte entlang der Sollbruchstelle leichter voneinander trennen, beispielsweise dadurch, dass ein Haken in die Öffnung eingeführt werden kann. Alternativ kann eine Vielzahl von Öffnungen in den Ausnehmungen ähnlich einer Perforation vorgesehen sein, so dass die jeweiligen Abschnitte nur noch teilweise miteinander verbunden und daher einfach voneinander abtrennbar sind.

In einer vorteilhaften Weiterbildung der erfindungsgemäßen Dichtungsvorrichtung weisen die Vorsprünge sich verjüngende Abschnitte auf. Diese verjüngen sich vorzugsweise zu äußeren Enden der Vorsprünge hin. Die Vorsprünge erleichtern so das Ineinanderstecken der Dichtkörper und reduzieren die Berührungsflächen der Vorsprünge, so dass die beim Ineinanderstecken entstehende Reibung reduziert und das Ineinanderstecken erleichtert wird.

Vorteilhafterweise umfasst die erfindungsgemäße Vorrichtung einen oder mehrere weitere elastisch verformbare Dichtkörper mit weiteren Ausnehmungen, die mit den ersten und/oder zweiten Ausnehmungen korrespondieren, so dass der erste Dichtkörper und/oder der zweite Dichtkörper in den weiteren Dichtkörper einsteckbar sind. Dieser weitere elastisch verformbare Dichtkörper dient zum einen als Verlängerungsstück für den Fall, dass lange Durchbrüche abgedichtet werden müssen, zum anderen kann er auch so aufgebaut sein, dass zwei erste oder zwei zweite elastisch verformbare Dichtkörper in ihn einsteckbar sind. Letzteres hat den Vorteil, dass der Einbau der Dichtungsvorrichtung auch dann fortgesetzt werden kann, wenn entweder nur noch erste oder nur noch zweite elastisch verformbare Dichtkörper vorhanden sind.

In einer Weiterentwicklung der efindungsgemäßen Dichtungsvorrichtung weist der weitere Dichtkörper zwei oder mehrere weitere Abschnitte auf, die an einer oder mehreren Sollbruchstellen voneinander abtrennbar sind. Durch diese Sollbruchstellen kann der weitere Dichtkörper genauso wie der erste und der zweite Dichtkörper an die vorliegenden Leitungsdurchmesser angepasst werden.

Die Erfindung ist wird anhand von vorteilhaften Ausführungsbeispielen anhand der beiliegenden Figuren näher erläutert. Es zeigen
- Figur 1: ein Ausführungsbeispiel der erfindungsgemäßen Dichtungsvorrichtung in einer Explosionsdarstellung,
- Figur 2: den ersten und den zweiten Dichtkörper aus Figur 1 in einer vergrößerten Darstellung aus einem etwas anderen Blickwinkel,
- Figur 3: den erfindungsgemäßen zweiten Dichtkörper a) in einer Draufsicht mit einem Ausschnitt A und b) den Ausschnitt A in einer vergrößerten Ansicht,
- Figur 4: eine weitere Draufsicht auf ein zweites Ausführungsbeispiel des zweiten Dichtkörpers,
- Figur 5: den ersten und den zweiten Dichtkörper, die teilweise ineinander gesteckt sind,
- Figur 6a): ein drittes Ausführungsbeispiel des erfindungsgemäßen zweiten Dichtkörpers in einer Draufsicht und 6b) den zweiten Dichtkörper in einer entsprechenden Schnittdarstellung,
- Figur 7: ein viertes Ausführungsbeispiel der Dichtungsvorrichtung ohne Spanneinrichtung und mit Vorsprüngen, die in axialer Richtung eine Neigung aufweisen,
- Figur 7b: eine Querschnittansicht des vierten Ausführungsbeispiels und
- Figur 8: eine beispielhafte Darstellung der Entnahme eines Abschnittes entlang der Sollbruchstelle anhand einer Variante des vierten Ausführungsbeispiels.

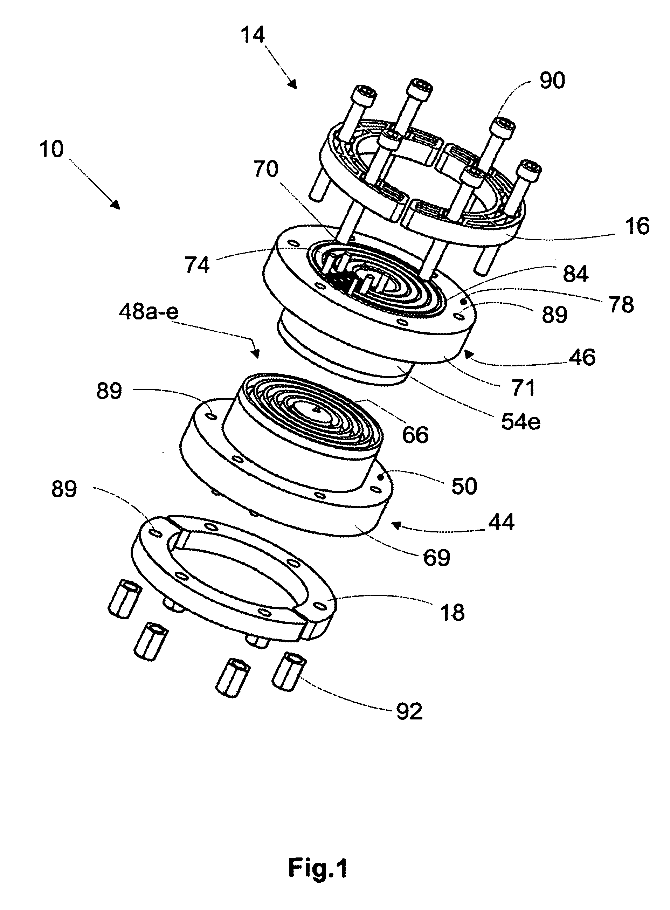

In Figur 1 ist ein erstes Ausführungsbeispiel der erfindungsgemäßen Dichtungsvorrichtung 10 mit einem ersten Dichtkörper 44 und einem zweiten Dichtkörper 46 in einer Explosionsdarstellung gezeigt. Die Dichtungsvorrichtung umfasst dabei eine Spanneinrichtung 14, welche aus einem ersten Spannring 16 und einem zweiten Spannring 18 aufgebaut ist, wobei jeder Spannring wie gezeigt aus zwei Halbringen zusammengesetzt sein kann, aber nicht muss.

Der erste Dichtkörper 44 weist erste Vorsprünge 48, eine erste Stirnfläche 50 auf, der zweite Dichtkörper 46 umfasst zweite Vorsprünge 54. Zur Montage der Dichtungsvorrichtung 10 werden der erste und der zweite Dichtkörper 44, 46 und der erste und der zweite Spannring 14, 16 werksseitig vormontiert. Der erste Dichtkörper 44 wird hierzu in den zweiten Dichtkörper 46 gesteckt. Anschließend werden Schrauben 90 durch Durchgangsbohrungen 89 des ersten und des zweiten Spannrings 14, 16 und des ersten und des zweiten Dichtkörpers 44, 46 geführt. Die Dichtungsvorrichtung 10 wird dann später in den abzudichtenden Durchbruch eingesetzt und die Dichtkörper 44, 46 durch Anziehen von Muttern 92 soweit ineinander geschoben, bis sie gegeneinander anschlagen. Anschließend werden die Dichtkörper 44, 46 durch fortgesetztes Anziehen der Muttern 92 verspannt. Dabei dehnen sich der erste und der zweite elastisch verformbare Dichtkörper 44, 46 radial aus und/oder wölben sich teilweise aus bzw. ein, so dass sie zum einen die Leitung zum anderen den Durchbruch abdichtet.

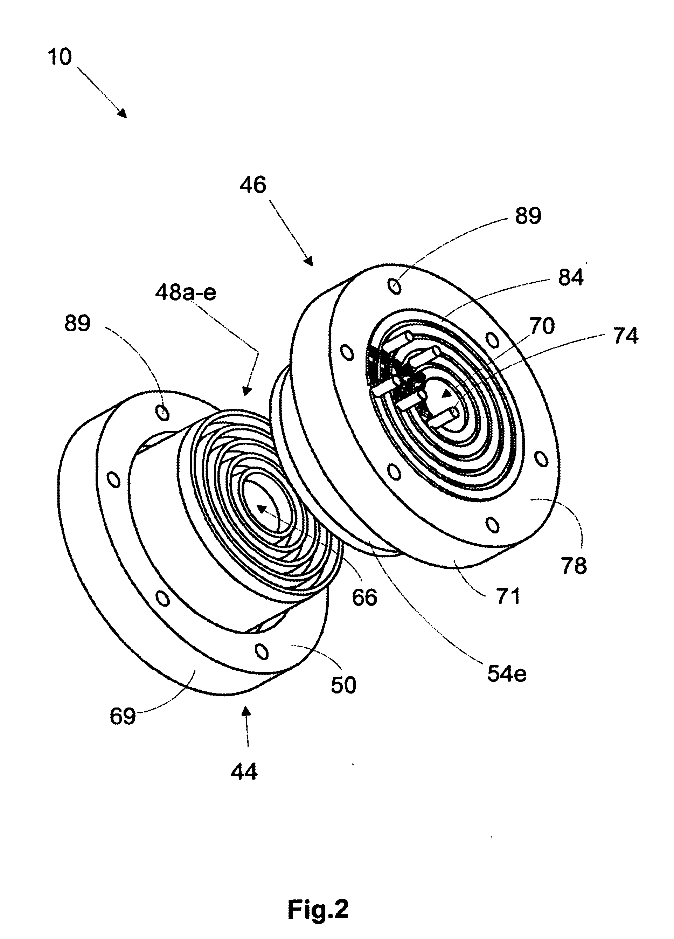

In Figur 2 sind der erste und der zweite Dichtkörper 44, 46 vergrößert dargestellt. Am zweiten Dichtkörper 46 erkennt man zweite Griffbereiche 74, die sich von einer zweiten Stirnfläche 56 des zweiten Dichtkörpers 46 aus erstrecken, sowie zweite Sollbruchstellen 84.

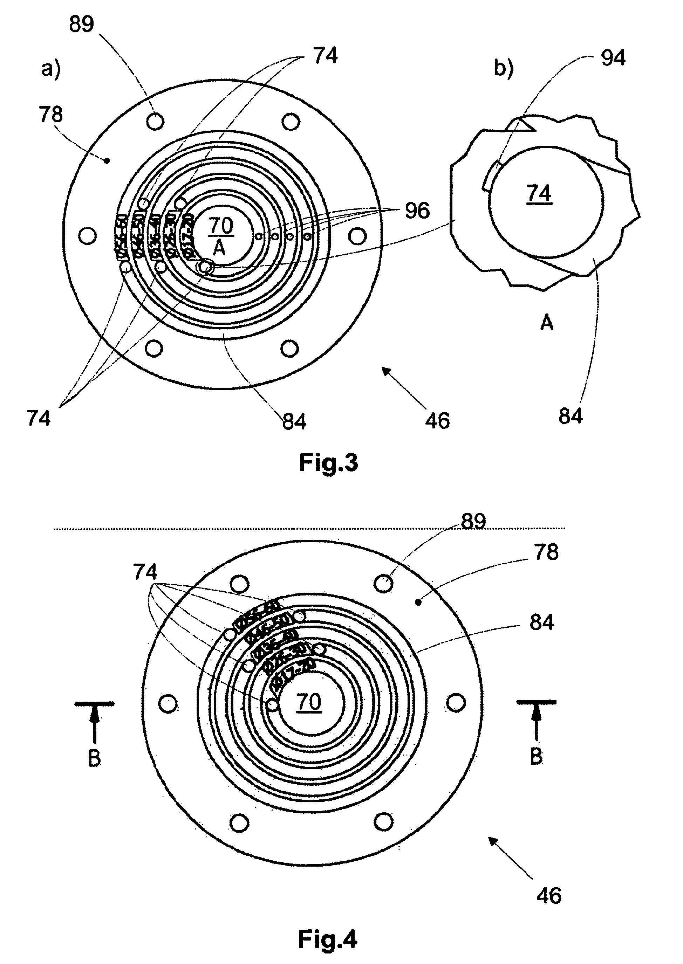

In Figur 3a) ist eine Draufsicht auf den zweiten Dichtkörper 46 mit einem Bereich A gezeigt, der in Figur 3b) vergrößert dargestellt ist. Am zweiten Griffbereich 74 ist eine Öffnung zu erkennen, die zum einfacheren Öffnen der zweiten Sollbruchstelle 84 dient. Weiterhin umfasst der dargestellte zweite Dichtkörper 46 Entlüftungslöcher 96, die dazu dienen, der Luft das Entweichen beim Ineinanderstecken des ersten und des zweiten Dichtkörpers 44, 46 zu ermöglichen. Der erste Dichtkörper 44 kann analog mit den hier beschriebenen Merkmalen ausgestattet werden.

In Figur 4 ist ein zweites Ausführungsbeispiel des zweiten Dichtkörpers in einer Draufsicht ohne Entlüftungslöcher gezeigt, im Vergleich zu Figur 3a) etwas gedreht.

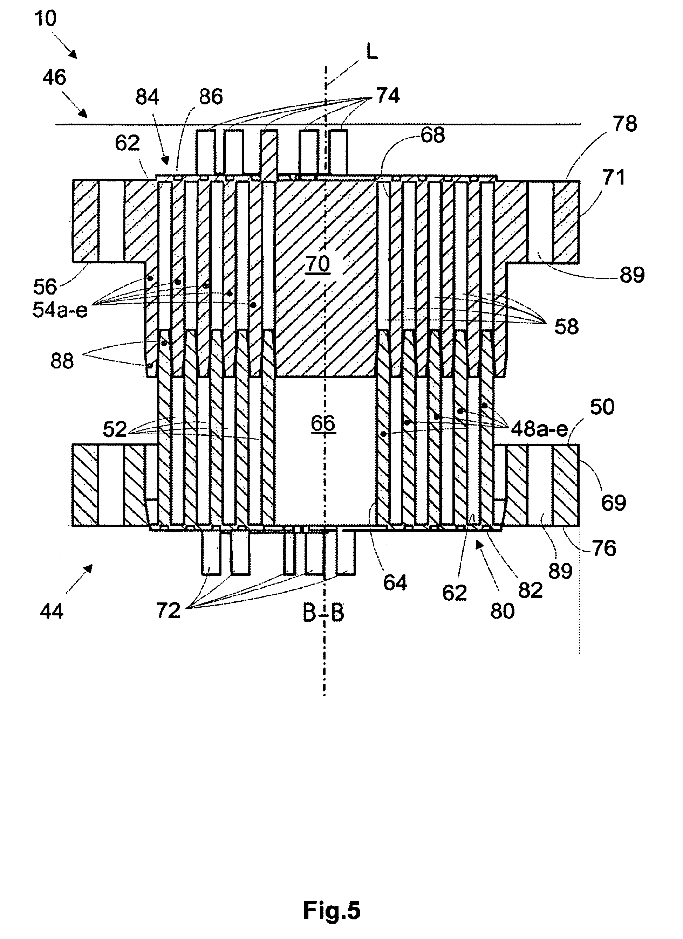

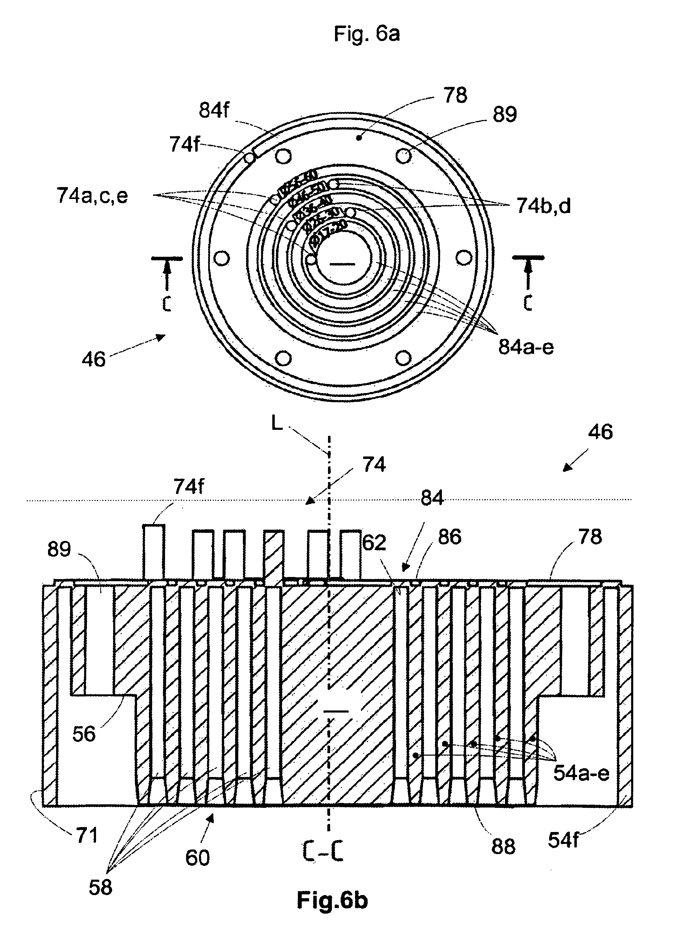

In Figur 5 ist die erfindungsgemäße Dichtungsvorrichtung 10 in einer Schnittdarstellung gezeigt. Die Dichtungsvorrichtung 10 weist eine Längsachse L und den ersten Dichtkörper 44 und den zweiten Dichtkörper 46 auf, die teilweise ineinander gesteckt sind. Der erste Dichtkörper 44 weist insgesamt fünf erste Vorsprünge 48a-e auf, die sich axial von einer ersten Stirnfläche 50 des ersten Dichtkörpers 44 erheben Der erste Vorsprung 48a ist der radial gesehen innere, 48e der äußere erste Vorsprung. Zwischen den ersten Vorsprüngen 48 weist der erste Dichtkörper 44 erste Ausnehmungen 52 auf. Der zweite Dichtkörper 46 umfasst insgesamt fünf zweite Vorsprünge 54a-e, die sich von einer ersten Stirnfläche 56 des zweiten Dichtkörpers 46 erheben, und fünf zweite Ausnehmungen 58. Die ersten und zweiten Vorsprünge 48, 54 und Ausnehmungen 52, 58 verlaufen rotationssymmetrisch um die Längsachse L und haben eine im Wesentlichen hohlzylindrische Form. Dadurch ergibt sich eine Art Lamellare Struktur. Die ersten Vorsprünge 48 des ersten Dichtkörpers 44 sind so konzipiert, dass sie in die zweiten Ausnehmungen 58 des zweiten Dichtkörpers 46 einbringbar sind. Selbiges gilt auch für die zweiten Vorsprünge 54 des zweiten Dichtkörpers 46, die in die ersten Ausnehmungen 52 des ersten Dichtkörpers 44 einbringbar sind. Der erste und der zweite Dichtkörper 44, 46 sind daher soweit ineinander steckbar, bis die erste Stirnfläche 50 des ersten Dichtkörpers 44 an die erste Stirnfläche 56 des zweiten Dichtkörpers 46 anschlägt. Alternativ können der erste und der zweite Dichtkörper 44, 46 nur soweit ineinander gesteckt werden, bis ein oberes Ende 60 der Vorsprünge 48, 54 (vgl. Figur 6) an ein geschlossenes Ende 62 der Ausnehmungen 52, 58 anschlägt. Beim Zusammenschieben treten die jeweils benachbarten ersten und zweiten Vorsprünge 48, 54 miteinander in Kontakt. Je weiter der erste und der zweite Dichtkörper 44, 46 ineinandergeschoben werden, desto größer wird diese Kontaktfläche. Es kommt daher zu der Situation, dass die sich in den Ausnehmungen 52, 58 befindende Luft nicht oder nur schwer entweichen kann und daher das Zusammenstecken stört. Um dies zu verhindern, können zum einen die Öffnungen 94 und zum anderen die Entlüftungslöcher 96 vorgesehen werden. Die ersten Vorsprünge 48 umschließen mit ersten Innenflächen 64 die erste zentrale Durchgangsöffnung 66 des ersten Dichtkörpers 44, während die zweiten Vorsprünge 54 mit zweiten Innenflächen 68 die zweite zentrale Durchgangsöffnung 70 des zweiten Dichtkörpers 46 umschließen. Radial nach außen werden der erste und der zweite Dichtkörper 44, 46 durch eine erste und eine zweite Mantelfläche 69, 71 abgeschlossen. Auch kann ein Gleitmittel auf die Kontaktflächen aufgebracht werden, so dass sich das Ineinanderstecken erleichtert.

Der erste Dichtkörper 44 wird werkseitig derart vormontiert, dass er in den zweiten Dichtkörper 46 eingesteckt wird. Der erste Dichtkörper 44 weist erste Griffbereiche 72 und der zweite Dichtkörper 46 zweite Griffbereiche 74 auf, die jeweils über zweite Stirnflächen 76, 78 des ersten bzw. des zweiten Dichtkörpers 44, 46 vorspringen. Zwischen dem geschlossenen Ende 62 der ersten Ausnehmungen 52 und der zweiten Stirnfläche 76 des ersten Dichtkörpers 44 erstrecken sich parallel zur Längsachse erste Sollbruchstellen 80. Ferner sind auf der zweiten Stirnfläche 76 erste Kerben 82 vorgesehen, die zusätzlich zur Definition der ersten Sollbruchstellen 80 beitragen.

Zwischen dem geschlossenen Ende 62 der zweiten Ausnehmungen 58 und der zweiten Stirnfläche 78 des zweiten Dichtkörpers 46 erstrecken sich parallel zur Längsachse zweite Sollbruchstellen 84. Ferner sind auf der zweiten Stirnfläche 78 zweite Kerben 86 vorgesehen, die zusätzlich zur Definition der zweiten Sollbruchstellen 84 beitragen. Um das Ineinanderstecken der Dichtkörper 44, 46 ineinander zu erleichtern, weisen die Vorsprünge 48, 54 sich zu ihren oberen Enden 60 hin verjüngende Abschnitte 88 auf.

Im dargestellten Grundzustand ist die erste Innenfläche 64 der ersten zentralen Durchgangsöffnung 66 dem radial nach außen gesehen als erstes angeordneten ersten Vorsprung 48a des ersten Dichtkörpers 44 zugeordnet. Dieser Vorsprung definiert damit den wirksamen Durchmesser der Dichtungsvorrichtung 10, worunter hier der Durchmesser der jeweils radial innersten Innenfläche 64 entweder der ersten oder der zweiten Vorsprünge 48, 54 verstanden werden soll. Der zweite Dichtkörper 46 ist im Grundzustand aus Stabilitätsgründen geschlossen, er muss durch Ergreifen eines der zweiten Griffbereiche 74 geöffnet werden. Soll nun eine Leitung abgedichtet werden, deren Durchmesser größer ist als derjenige der ersten zentralen Durchgangsöffnung 66 im Grundzustand, wird der erste Dichtkörper 44 am ersten Griffbereich 72 ergriffen und eine Kraft in den ersten Dichtkörper 44 eingeleitet, so dass der erste Vorsprung 48a entlang der ersten Sollbruchstelle 80 vom benachbarten ersten Vorsprung 48b getrennt wird. Der erste Vorsprung 48a wird entfernt, so dass nun nicht mehr die erste Innenfläche 64 des ersten Dichtkörpers 44, sondern die zweite Innenfläche 64 des zweiten Dichtkörpers 46 den wirksamen Durchmesser der Dichtungsvorrichtung 10 bestimmt. Der wirksame Durchmesser der Dichtungsvorrichtung 10 wird damit vergrößert. Auf diese Weise können auch die übrigen ersten Vorsprünge 48b-d, und die zweiten Vorsprünge 54a-d entfernt werden. So ist wechselweise mal die erste Innenfläche 64 des ersten Dichtkörpers 44 und mal die zweite Innenfläche 64 des zweiten Dichtkörpers 46 maßgeblich für den wirksamen Durchmesser der Dichtungsvorrichtung 10. Die Ausnehmungen 52, 58 und die Sollbruchstellen 80, 84 sind dabei so ausgelegt, dass die durch Entfernen der jeweiligen ersten und zweiten Vorsprünge 48, 54 entstehenden Durchmesser der zentralen Durchgangsöffnungen 66, 68 im Wesentlichen den gängigen Leitungsdurchmessern entsprechen. Es kann ein gewisses Übermaß vorgesehen sein, dass einerseits ein einfaches Verschieben der Dichtkörper 44, 46 auf entlang der Leitung ermöglicht, gleichzeitig aber eine gewisse Fixierung der Dichtkörper 44, 46 auf der Leitung bewirkt, so dass die Dichtkörper 44, 46 bei vertikal oder im Wesentlichen vertikal verlaufenden Leitungen nicht ständig vom Monteur gehalten werden muss, um nicht in Wirkrichtung der Schwerkraft abzurutschen. Anderseits ist das Übermaß so bemessen, dass die Leitung und der Durchbruch beim Verspannen sicher abgedichtet werden. Beim Verspannen der Dichtungsvorrichtung 10 weichen die Dichtkörper 44, 46 radial nach innen und nach außen aus und/oder wölben sich ein bzw. aus, so dass die Leitung entweder mit der ersten Innenfläche 64 oder mit der zweiten Innenfläche 68 und der Durchbruch mit den Mantelflächen 69 und 71 abgedichtet werden.

In Figur 6a) ist ein weiteres Ausführungsbeispiel des erfindungsgemäßen zweiten Dichtkörpers 46 in einer Draufsicht, in Figur 6b) in einer entsprechenden Schnittdarstellung gezeigt. Im Gegensatz zu den in den Figuren 1 bis 5 dargestellten ersten und zweiten Dichtkörpern 44, 46 kann dieser auch auf unterschiedliche Durchmesser der Kernlochbohrungen angepasst werden. Die Durchgangsbohrung 89 befindet sich zwischen den zweiten Vorsprüngen 54e und 54f, so dass sowohl die zweiten Vorsprünge 54a-e, die radial nach innen von der Durchgangsbohrung 89 angeordnet sind, als auch der zweite Vorsprung 54f, der radial nach außen von der Durchgangsbohrung 89 angeordnet ist, auf die oben beschriebene Weise entfernt werden können. Im dargestellten Beispiel ist nur der radial außerhalb der Durchgangsbohrung 89 angeordnete zweite Vorsprung 54f angeordnet, wobei die Anzahl der trennbaren zweiten Vorsprünge prinzipiell beliebig gewählt werden kann. Der erste Dichtkörper 44 kann analog mit den hier beschriebenen Merkmalen ausgestattet werden.

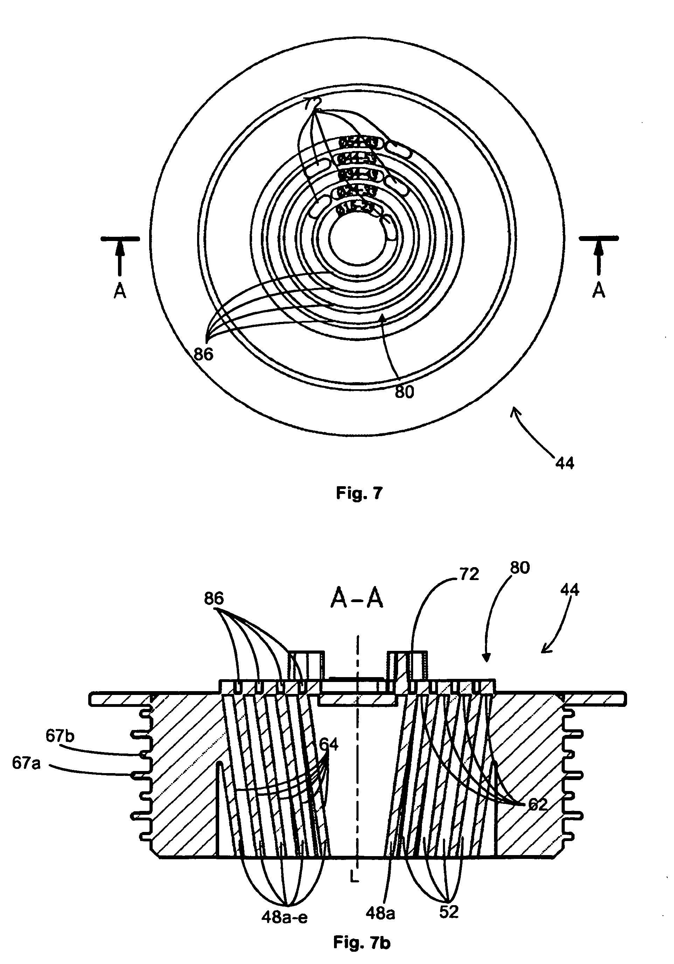

Figur 7 und 7b zeigen ein weiteres Ausführungsbeispiel der Dichtungsvorrichtung 10 in zwei unterschiedlichen Ansichten. Gemeinsame Merkmale mit bereits beschriebenen Ausführungsformen sind gleichermaßen referenziert. Ein Merkmal dieser Ausführung ist, dass sie auch ohne zweiten Dicht- bzw. Körper einsetzbar ist. Hierzu weist der erste elastisch verformbare Dichtkörper 44 rotationssymmetrische Vorsprünge 48 auf, die relativ zur Längsachse L in einem definierten Winkel geneigt sind, wobei der Winkel je nach Elastizitätsmodul des eingesetzten Materials variieren kann. Die Durchmesser der Vorsprünge sind derart angepasst, dass sie kleiner sind als die üblichen Leitungsdurchmesser. Der im Grundzustand innerste Vorsprung 48a, der direkt an der Leitung anliegt, wird radial nach außen gedrückt, wenn der erste Dichtkörper 44 in die Leitung eingebaut wird. In Folge dessen wird der Druck vom ersten Vorsprung 48a auf die benachbarten Vorsprünge 48b-e übertragen. Im Ergebnis kommt es zu einer radialen Auslenkung der Vorsprünge 48 und abschnittsweise zu einem Kontakt zwischen den Seitenflächen 64 der benachbarten Vorsprünge 48, so dass die Aussparungen 52 überbrückt werden und eine Dichtungswirkung eintritt. Optional kann diese Wirkung auch durch einen zweiten vorzugsweise elastisch verformbaren Dicht- bzw. Körper, wie in den oben dargestellten Ausführungsformen erreicht werden, der in die Aussparungen 52 des ersten Dichtkörpers 44 einschiebbar ist. Ferner weist diese Ausführungsform auf der Mantelfläche 69 unterschiedlich dimensionierte Dichtungslamellen 67a, 67b auf, mittels derer der Zwischenraum zwischen der Mantelfläche 69 und Durchbruch abgedichtet wird. Der Durchmesser der Mantelfläche 69 ist dabei so dimensioniert, dass die Dichtungslamellen 67a, 67b beim Einsatz an den Durchbruch anschmiegen.

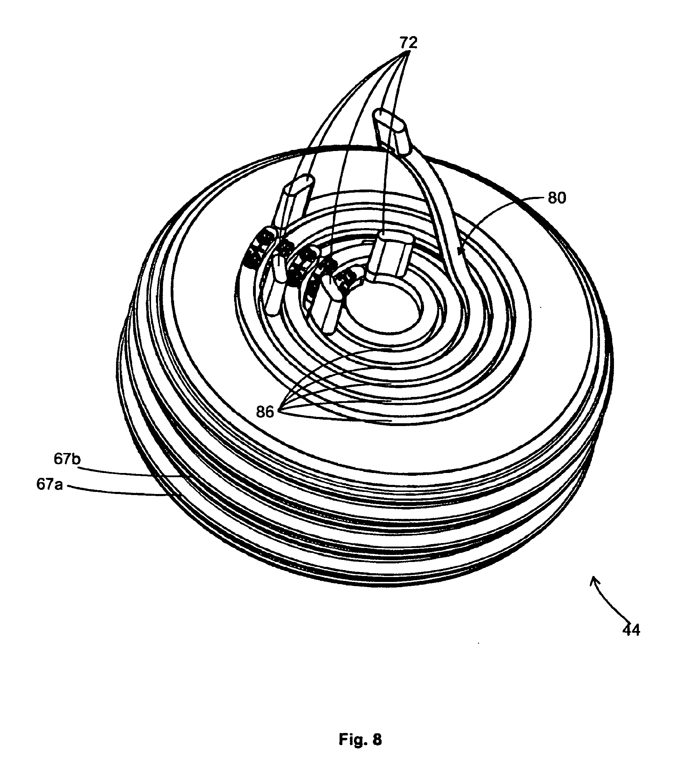

Figur 8 zeigt eine Variante der vierten Ausführungsform, welches die Abtrennung mehrerer Vorsprünge 48a-b entlang einer Sollbruchstelle 80 demonstriert. Durch Krafteinleitung über den Griffbereich 72 wird das geschlossene Ende der Ausnehmungen 62 entlang der Sollbruchstelle 80, die mit den Ausnehmungen 86 zusammenwirkt, in zirkulärer Richtung von dem ersten Dichtkörper 44 getrennt. Vorsprünge 48a-b, die in radialer Richtung innerhalb des entsprechenden geschlossenen Endes 62 liegen, werden ebenso von dem ersten Dichtkörper 44 getrennt. Es ist somit nur ein Abtrennvorgang zum Anpassen des ersten Dichtkörpers 44 an den Leitungsdurchmesser notwendig.

Die Erfindung ist anhand von bevorzugten Ausführungsbeispielen beschrieben worden. Variationen, Modifikationen oder Ergänzungen, die sich in naheliegender Weise aus der Beschreibung ergeben, gehen nicht über das erfinderische Konzept hinaus und sind vom Schutzumfang erfasst, der von folgenden Ansprüchen definiert wird:

## Patentansprüche

1. Dichtungsvorrichtung zum Abdichten eines Durchbruchs, mit
mindestens einem elastisch verformbaren Dichtkörper (44) und einem zweiten Körper (46), wobei der Dichtkörper (44) und der zweite Körper (46) je zwei oder mehrere Abschnitte aufweisen, die an einer oder mehreren Sollbruchstellen (80, 84) voneinander abtrennbar sind, und die Abschnitte Griffbereiche (72, 74) zum Ergreifen und zum Trennen der Abschnitte an den Sollbruchstellen (80, 84) aufweisen, wobei der erste elastisch verformbare Dichtkörper (44) eine oder mehrere sich im Wesentlichen in axialer Richtung erstreckende Ausnehmungen (52) aufweist, und
der zweite Körper (46) eine oder mehrere sich im Wesentlichen in axialer Richtung erstreckende Vorsprünge (54a-e) aufweist, wobei die Ausnehmungen (52) des ersten Dichtkörpers (44) und die Vorsprünge (54) des zweiten Körpers (46) miteinander korrespondieren, so dass der erste Dichtkörper (44) und der zweite Körper (46) ineinander steckbar sind, und
Entlüftungslöcher (96) zum Abführen der sich in den Ausnehmungen (52, 58) befindenden Luft beim Ineinanderstecken des ersten Dichtkörpers (44) und des zweiten Körpers (46) vorhanden sind.

2. Dichtungsvorrichtung nach Anspruch 1,
**dadurch gekennzeichnet, dass** die Griffbereiche (72, 74) benachbart zu den Sollbruchstellen (80, 84) im Dichtkörper (44, 46) angeordnet sind.

3. Dichtungsvorrichtung nach einem der vorherigen Ansprüche,
**gekennzeichnet durch** eine mit der Sollbruchstelle (80, 84) zusammenwirkende Ausnehmung (82, 86) oder Öffnung (94) zum Öffnen der Sollbruchstelle (80, 84).

4. Dichtungsvorrichtung nach Anspruch 3,
**dadurch gekennzeichnet, dass** die Ausnehmung (82, 86) rotationssymmetrisch um eine Längsachse (L) der Dichtungsvorrichtung (10) verläuft.

5. Dichtungsvorrichtung nach einem der vorstehenden Ansprüche,
**dadurch gekennzeichnet, dass** mehrere, bezogen auf eine Längsachse konzentrische Ausnehmungen (52) und mehrere konzentrische Vorsprünge (48a-e) an dem ersten Dichtkörper (44) ausgebildet sind und mehrere, bezogen auf eine Längsachse konzentrische Ausnehmungen (58) und konzentrische Vorsprünge (54a-e) an dem zweiten Körper (46) ausgebildet sind, die so radial versetzt zueinander angeordnet sind, dass die Vorsprünge (48a-e) des ersten Dichtkörpers in die Ausnehmungen (58) des anderen Körpers und die Vorsprünge (54a-e) des zweiten Körpers in die Ausnehmungen (52) des ersten Dichtkörpers in axialer Richtung einschiebbar sind.

6. Dichtungsvorrichtung nach einem der vorstehenden Ansprüche,
**dadurch gekennzeichnet, dass** die Seitenflächen der Ausnehmung (52, 58) oder Vorsprünge (48a-e, 54a-e) bezogen auf die Längsachse in einem Winkel von etwa 0,5 bis 2 Grad, vorzugsweise 1,4 Grad verlaufen.

7. Dichtungsvorrichtung nach einem der vorstehenden Ansprüche,
**dadurch gekennzeichnet, dass** die erste Ausnehmung (52) eine erste Sollbruchstelle (80) definiert, an welcher der erste Vorsprung (48) abtrennbar ist und/oder die zweite Ausnehmung (58) eine zweite Sollbruchstelle (84) definiert, an welcher der zweite Vorsprung (54) abtrennbar ist.

8. Dichtungsvorrichtung nach einem der vorstehenden Ansprüche, **dadurch gekennzeichnet, dass** die Sollbruchstelle (80, 84) durch eine Ausnehmung (82, 86), Perforation, abschnittsweise abweichende Materialeigenschaften, eine Stufe oder einen Absatz im Dichtkörper (44) oder Körper (46) definiert wird,

9. Dichtungsvorrichtung nach einem der Ansprüche7 oder 8,
**gekennzeichnet durch** einen ersten Griffbereich (72) zum Ergreifen und zum Trennen der ersten Vorsprungs (48) an der ersten Sollbruchstelle (80) und/oder einen zweiten Griffbereich (74) zum Ergreifen und zum Trennen des zweiten Vorsprungs (54) an der zweiten Sollbruchstelle (84), wobei die Griffbereiche (72, 74) vorzugsweise benachbart zu den Öffnungen (94) angeordnet sind.

10. Dichtungsvorrichtung nach einem der vorstehenden Ansprüche enthaltend eine Spanneinrichtung (14) zum Verspannen des Dichtkörpers (44) und Körpers (46).

## Claims

1. A sealing device for sealing an aperture, having at least one resiliently deformable sealing body (44) and a second body (46), wherein the sealing body (44) and the second body (46) each have two or a plurality of portions which are separable from one another at one or a plurality of predetermined breaking points (80, 84), and the portions have gripping regions (72, 74) for grasping and separating the portions at the predetermined breaking points (80, 84), wherein the first resiliently deformable sealing body (44) has one or a plurality of cutouts (52) extending substantially in an axial direction, and the second body (46) has one or a plurality of projections (54a-e) extending substantially in an axial direction, wherein the cutouts (52) of the first sealing body (44) and the projections (54) of the second body (46) correspond to one another, so that the first sealing body (44) and the second body (46) can be put in one another, and vents (96) are present to carry away the air, located in the cutouts (52, 58), upon placing of the first sealing body (44) and the second body (46) into one another.

2. A sealing device according to claim 1, **characterised in that** the gripping regions (72, 74) are arranged in the sealing body (44, 46) in a manner adjacent to the predetermined breaking points (80, 84).

3. A sealing device according to any one of the preceding claims, **characterised by** a cutout (82, 86) or opening (94), these cooperating with the predetermined breaking point (80, 84), for opening of the predetermined breaking point (80, 84).

4. A sealing device according to claim 3, **characterised in that** the cutout (82, 86) runs in a rotationally-symmetrical manner about a longitudinal axis (L) of the sealing device (10).

5. A sealing device according to any one of the preceding claims, **characterised in that** a plurality of cutouts (52), concentric related to a longitudinal axis, and a plurality of concentric projections (48a-e) are formed on the first sealing body (44) and a plurality of cutouts (58), concentric related to a longitudinal axis, and concentric projections (54a-e) are formed on the second body (46), which are arranged so radially displaced in relation to one another that the projections (48a-e) of the first sealing body can be pushed in an axial direction into the cutouts (58) of the other body and the projections (54a-e) of the second body can be pushed in an axial direction into the cutouts (52) of the first sealing body.

6. A sealing device according to any one of the preceding claims,
**characterised in that** the lateral surfaces of the cutout (52, 58) or projections (48a-e, 54a-e) run, related to the longitudinal axis, at an angle of approximately 0.5 to 2 degrees, preferably 1.4 degrees.

7. A sealing device according to any one of the preceding claims,
**characterised in that** the first cutout (52) defines a first predetermined breaking point (80) at which the first projection (48) is separable and/or the second cutout (58) defines a second predetermined breaking point (84) at which the second projection (54) is separable.

8. A sealing device according to any one of the preceding claims,
**characterised in that** the predetermined breaking point (80, 84) is defined by a cutout (82, 86), perforation, material properties differing from portion to portion, a step or a shoulder in the sealing body (44) or body (46).

9. A sealing device according to one of claims 7 and 8, **characterised by** a first gripping region (72) for grasping and for separation of the first projection (48) at the first predetermined breaking point (80) and/or a second gripping region (74) for grasping and for separation of the second projection (54) at the second predetermined breaking point (84), wherein the gripping regions (72, 74) are preferably arranged adjacent to the openings (94).

10. A sealing device according to any one of the preceding claims, comprising a clamping device (14) to tension the sealing body (44) and the body (46).

## Revendications

1. Dispositif d'étanchéité servant à étanchéifier une percée,
comportant au moins un corps d'étanchéité (44) élastiquement déformable et un deuxième corps (46), sachant que le corps d'étanchéité (44) et le deuxième corps (46) présentent respectivement deux ou plusieurs sections, qui peuvent être détachées les unes des autres au niveau d'un point destiné à la rupture ou de plusieurs points destinés à la rupture (80, 84), et que les sections présentent des zones de préhension (72, 74) servant à saisir et à séparer les sections au niveau des points destinés à la rupture (80, 84), sachant que le premier corps d'étanchéité (44) élastiquement déformable présente un ou plusieurs évidements (52) s'étendant essentiellement dans une direction axiale, et
sachant que le deuxième corps (46) présente une ou plusieurs parties faisant saillie (54a-e) s'étendant essentiellement dans une direction axiale, sachant que les évidements (52) du premier corps d'étanchéité (44) et les parties faisant saillie (54) du deuxième corps (46) correspondent entre eux, si bien que le premier corps d'étanchéité (44) et le deuxième corps (46) peuvent être enfichés l'un dans l'autre, et
sachant que des trous d'aération (96) servant à évacuer l'air se trouvant dans les évidements (52, 58) lors de l'enfichage l'un dans l'autre du premier corps d'étanchéité (44) et du deuxième corps (46) sont présents.

2. Dispositif d'étanchéité selon la revendication 1,
**caractérisé en ce que** des zones de préhension (72, 74) sont disposées dans le corps d'étanchéité (44, 46) à proximité des points destinés à la rupture (80, 84).

3. Dispositif d'étanchéité selon l'une quelconque des revendications précédentes,
**caractérisé par** un évidement (82, 86) qui coopère avec le point destiné à la rupture (80, 84) ou par une ouverture (94) servant à ouvrir le point destiné à la rupture (80, 84).

4. Dispositif d'étanchéité selon la revendication 3,
**caractérisé en ce que** l'évidement (82, 86) s'étend de manière symétrique en rotation autour d'un axe longitudinal (L) du dispositif d'étanchéité (10).

5. Dispositif d'étanchéité selon l'une quelconque des revendications précédentes,
**caractérisé en ce que** plusieurs évidements (52) concentriques par rapport à un axe longitudinal et plusieurs parties faisant saillie (48a-e) concentriques sont réalisés au niveau du premier corps d'étanchéité (44), et **en ce que** plusieurs évidements (58) concentriques par rapport à un axe longitudinal et plusieurs parties faisant saillie (54a-e) concentriques sont réalisés au niveau du deuxième corps (46), lesquels sont ainsi disposés de manière radialement décalée les uns par rapport aux autres si bien que les parties faisant saillie (48a-e) du premier corps d'étanchéité peuvent être introduites par coulissement dans les évidements (58) de l'autre corps et que les parties faisant saillie (54a-e) du deuxième corps peuvent être introduites par coulissement dans les évidements (52) du premier corps d'étanchéité, dans la direction axiale.

6. Dispositif d'étanchéité selon l'une quelconque des revendications précédentes,
**caractérisé en ce que** les faces latérales de l'évidement (52, 58) ou des parties faisant saillie (48a-e, 54a-e) s'étendent de manière à former un angle par rapport à l'axe longitudinal compris entre environ 0,5 et 2 degrés, de préférence un angle de 1,4 degré.

7. Dispositif d'étanchéité selon l'une quelconque des revendications précédentes,
**caractérisé en ce que** le premier évidement (52) définit un premier point destiné à la rupture (80), au niveau duquel la première partie faisant saillie (48) peut être détachée, et/ou **en ce que** le deuxième évidement (58) définit un deuxième point destiné à la rupture (84), au niveau duquel la deuxième partie faisant saillie (54) peut être détachée.

8. Dispositif d'étanchéité selon l'une quelconque des revendications précédentes, **caractérisé en ce que** le point destiné à la rupture (80, 84) est défini par un évidement (82, 86), une perforation, des propriétés de matériau divergeant par endroits, un étage ou un décrochement dans le corps d'étanchéité (44) ou dans le corps (46).

9. Dispositif d'étanchéité selon l'une quelconque des revendications 7 ou 8,
**caractérisé par** une première zone de préhension (72) servant à saisir et à séparer la première partie faisant saillie (48) au niveau du premier point destiné à la rupture (80) et/ou par une deuxième zone de préhension (74) servant à saisir et à séparer la deuxième partie faisant saillie (54) au niveau du deuxième point destiné à la rupture (84), sachant que les zones de préhension (72, 74) sont disposées de préférence à proximité des ouvertures (94).

10. Dispositif d'étanchéité selon l'une quelconque des revendications précédentes, contenant un système de serrage (14) servant à serrer le corps d'étanchéité (44) et le corps (46).
